# EUROPÄISCHE PATENTSCHRIFT

(11) **EP 1 818 672 B1**
(45) Veröffentlichungstag und Bekanntmachung des Hinweises auf die Patenterteilung: **29.08.2012**
(21) Anmeldenummer: 06101681.2
(22) Anmeldetag: 14.02.2006
(51) Int. Cl.: G01N 27/416

(54) **Messvorrichtung und Verfahren für den Betrieb der Messvorrichtung**
Measuring device and method for operating the measuring device
Dispositif de mesure et procédé destinés au fonctionnement du dispositif de mesure

(43) Veröffentlichungstag der Anmeldung: 15.08.2007
(73) Patentinhaber: Mettler-Toledo AG, 8606 Greifensee (CH)
(72) Erfinder: Ammann, Jürgen, 8004 Zürich (CH); Rissi, René, 8614 Bertschikon (CH); Anders, Klaus-Dieter, 5452 Oberrohrdorf (CH); Di, Jiandong, 8051 Zürich (CH); De Agostini, Antonio, 3006 Bern (CH)

(56) Entgegenhaltungen:
- EP-A- 0 497 994
- EP-A- 1 550 861
- US-B1- 6 173 600
- PATENT ABSTRACTS OF JAPAN Bd. 010, Nr. 382 (P-529), 20. Dezember 1986 (1986-12-20) & JP 61 173169 A (MITSUBISHI ELECTRIC CORP), 4. August 1986 (1986-08-04)

## Beschreibung

Die vorliegende Erfindung betrifft eine Messvorrichtung bzw. ein Messsystem mit wenigstens einer Messsonde, insbesondere einer physikalischen oder elektro-chemischen Messsonde, eine solche Messsonde und ein Verfahren für den Betrieb der Messvorrichtung.

Die Kontrolle industrieller Prozesse, beispielsweise in der chemischen und pharmazeutischen Industrie, in der Textilindustrie, in der Lebensmittel- und Getränkeindustrie, bei der Papier- und Zellstoffverarbeitung oder bei der Wasseraufbereitung und Abwasserbehandlung basiert auf der Messung von Prozessgrössen, die anhand von entsprechenden Messsonden bzw. Sensoren ermittelt werden.

Gemäss [1], "Process Measurement Solutions Catalog 2005/06", Mettler-Toledo GmbH, CH-8902 Urdorf, Seiten 8 und 9 besteht ein komplettes Messsystem aus einem Gehäuse, einer Messsonde, einem Kabel und einem Messumformer (auch Transmitter genannt). Mittels des Gehäuses wird die Messsonde mit dem zu messenden oder zu überwachenden Prozess in Verbindung gebracht; beispielsweise in das Prozessgut eingetaucht und gehalten. Mittels der Messsonde werden entsprechende Prozesseigenschaften gemessen. Messsignale werden über das Kabel, das in [1], Seite 8, fünf Adern aufweist, zum Transmitter übertragen, der mit dem Prozessleitsystem kommuniziert und die Messsignale in lesbare Daten umwandelt. Die Messsonden werden entsprechend den zu messenden Eigenschaften des Prozessguts gewählt.

In [2], Prozessanalytische Systemlösungen für die Brauerei, Firmenschrift der Mettler-Toledo GmbH, CH-8902 Urdorf, Art. Nr. 52 900 309, Druckdatum 09/2003, ist beschrieben, dass beispielsweise in einzelnen Stufen der Prozesskette einer Brauerei (gebildet durch die Wasseraufbereitung; das Sudhaus; den Gär- und Lagerkeller; die Filtration, Karbonisierung und Abfüllung; sowie die Abwasserbehandlung) die Leitfähigkeit, der gelöste Sauerstoff, der pH-Wert, der CO₂-Wert und die Trübung des Prozessguts mittels entsprechenden Messsonden gemessen werden.

Für die einwandfreie Prozessführung ist der Zustand der Messsonden von Bedeutung, deren Eigenschaften sich nach längerer Betriebsdauer normalerweise ändern.

Ein Verfahren zur Bestimmung des Zustands der in einer ein- oder mehrstufigen Anlage integrierten Messsonden, die, ohne diese auszubauen, von Zeit zu Zeit, insbesondere unter Anwendung bekannter CIP- oder SIP-Prozesse, gereinigt werden, ist aus [3], EP 1 550 861 A1 bekannt. Dabei wird die Temperatur der Messsonde oder des die Messsonde umgebenden Mediums mittels eines innerhalb oder ausserhalb der Messsonde vorgesehenen Messfühlers gemessen und anhand des während des Einsatzes der Messsonde registrierten Verlaufs der gemessenen Temperatur und eventuell des Prozesswerts (z.B. pH) der Zustand der Messsonde bestimmt.

Gemäss [4], WO 92/21962 werden zur Messung der Wasserstoffionenkonzentration in Flüssigkeiten bzw. zur pH-Messung häufig Glaselektroden eingesetzt, deren Zustand vorzugsweise permanent überwacht wird, da beispielsweise eine Beschädigung der ionensensitiven Membran, eine Verschmutzung des Diaphragmas, ein Leitungsunterbruch und/oder ein Kurzschluss innerhalb der Elektrode zu einer Beeinträchtigung der Messgenauigkeit führt.

Gemäss [4] wird die in ein Messmedium eingetauchte Messsonde, die eine Glaselektrode als Messelektrode und eine Referenzelektrode aufweist, hochohmig mit einem in Amplitude und Dauer variablen Rechteckimpuls beaufschlagt, wobei die durch die Sondenimpedanz veränderte Spannung der Messsonde gemessen und die erhaltenen Messwerte mit einem experimentell oder rechnerisch ermittelten Sollwert für eine intakte Messsonde verglichen wird. Die Rechteckimpulse werden dabei von einem Analogausgang eines Prozessors abgegeben und der Messsonde über eine gesonderte Übertragungsleitung zugeführt.

Bei dem in [5], EP 0 419 769 A2 beschriebenen Verfahren wird die Überwachung mittels symmetrischer bipolarer Stromimpulse durchgeführt, die von einer Steuereinheit abgegeben werden. Die Periodendauer der Stromimpulse ist frei wählbar und kann entsprechend der geforderten Prüfgenauigkeit unterschiedlich eingestellt werden. Dieses Verfahren erfordert einen verhältnismässig grossen Schaltungsaufwand, insbesondere zwei Steuerleitungen, mittels derer, zur Erzeugung der symmetrischen bipolaren Stromimpulse, ein Umschalten von einer positiven Spannungsquelle auf eine negative Spannungsquelle bzw. ein Umschalten von der Messphase, zur Messung des pH-Wertes, auf die Prüfphase, zur Prüfung der Elektroden, durchführbar ist.

Aus [6], EP 0 497 994 A1, ist ein Verfahren zur Prüfung einer pH-Messsonde bekannt, die neben der Glaselektrode und der Referenzelektrode noch eine Hilfselektrode aufweist. Ferner sind zwei Auswerteeinrichtungen vorgesehen, die von einem ersten bzw. einem zweiten Generator mit einer Testwechselspannung versorgt werden. Hierbei arbeitet der erste Generator mit einer um ein geradzahliges Vielfaches höheren Frequenz als der zweite Generator. Dadurch ist eine getrennte Überwachung von Glaselektrode und Referenzelektrode möglich. Überprüft wird im einen Fall der Widerstand der aus Glaselektrode und Hilfselektrode gebildeten Kette, im anderen Fall der aus Referenzelektrode und Hilfselektrode gebildeten Kette. Durch das gewählte Verhältnis der von den Generatoren erzeugten Frequenzen lässt sich eine ausreichend genaue Differenzierung zwischen den Ausgangssignalen in beiden Auswerteeinrichtungen gewinnen, da jeweils ein Ausgangssignal durch die phasenempfindliche Gleichrichtung in der Auswerteschaltung der jeweils anderen Elektrode unterdrückt wird. Die Auswerteeinrichtungen stellen daher nicht mehr direkt die Potentialdifferenz zwischen der Glaselektrode und der Referenzelektrode fest. Sie stellen jedoch eine Potentialdifferenz zwischen der Glaselektrode und der Hilfselektrode beziehungsweise zwischen der Referenzelektrode und der Hilfselektrode fest. Da beide Potentialdifferenzen auf das gleiche Potential der Hilfselektrode bezogen sind, lässt sich die Potentialdifferenz zwischen der Glaselektrode und der Referenzelektrode durch einen Differenzverstärker ermitteln. Bei dieser Messschaltung sind der Messsonde daher die Testwechselspannungen von zwei verschiedenen Generatoren zuzuführen. Diese Testwechselspannungen werden wiederum zur späteren phasenkohärenten Verarbeitung der Signale verwendet und müssen daher auch über entsprechende Leitungen normalerweise von der Auswerteeinheit zur Messsonde übertragen werden.

Die Verwendung von zusätzlichen Übertragungsleitungen für die Übertragung von Signalen ist jedoch mit einem entsprechenden Aufwand verbunden. Zudem sind bei bereits installierten Anlagen die erforderlichen Leitungen gar nicht vorhanden und kaum oder nur mit sehr hohen Kosten und Betriebsunterbrüchen nachrüstbar. Dies ist auch deshalb von Nachteil weil im Zuge der Miniaturisierung und der somit möglichen dezentralen Anordnung intelligenter Bauteile der Bedarf zur Übertragung zusätzlicher Signale eher steigen wird, weshalb bei bestehenden Anlagen höher entwickelte und dezentral zu installierende Messsonden nur beschränkt einsetzbar sein werden.

Oben wurde beschrieben, dass bei grösseren Anlagen, beispielsweise in Brauereien, zahlreiche Messsonden eingesetzt werden. Von grosser Bedeutung ist daher auch die Verwaltung der eingesetzten Messsonden durch den Anwender.

Der vorliegenden Erfindung liegt daher die Aufgabe zugrunde, eine verbesserte Messvorrichtung mit wenigstens einer Messsonde und ein Verfahren für den Betrieb der wenigstens einen Messsonde sowie eine entsprechende Messsonde anzugeben.

Insbesondere ist eine Messvorrichtung anzugeben, in die Messsonden vorteilhaft integriert werden können. D.h., beim Einbau einer neuen oder bereits benutzten Messsonde soll der Messprozess die Messsonde erfassen und gegebenenfalls notwendige Adaptionen seitens der Messsonde und/oder seitens des Messprozesses vornehmen können.

Die Überwachung der Messsonden unter Berücksichtigung äusserer Einwirkungen und/oder immanenter Eigenschaften der Messsonde oder Veränderungen derselben soll weiter vereinfacht und verbessert werden.

In vorzugsweisen Ausgestaltungen soll eine vorteilhafte Steuerung der Messsonden realisiert werden.

Weiter soll der Betrieb und die Verwaltung der Messsonden des Messsystems vereinfacht werden.

Ferner soll die für die Übertragung von Signalen vorgesehene Infrastruktur der Messvorrichtung bzw. des Messsystems vereinfacht werden.

In vorzugsweisen Ausgestaltungen soll zudem die Kompatibilität der erfindungsgemässen Messvorrichtung mit konventionellen Messsonden erhalten bleiben.

Diese Aufgaben werden mit einer Messvorrichtung bzw. einem Messsystem mit wenigstens einer Messsonde, insbesondere einer physikalischen oder elektro-chemischen Messsonde, einer solchen Messsonde und einem Verfahren für den Betrieb der Messvorrichtung gelöst, welche die in Anspruch 1, 10 bzw. 20 angegebenen Merkmale aufweisen. Vorteilhafte Ausgestaltungen der Erfindung sind in weiteren Ansprüchen angegeben.

Die Messvorrichtung weist wenigstens eine mit wenigstens einer mit einer oder mehreren Speichereinheiten versehene Messsonde auf, mittels derer Prozessgrössen eines Prozessguts, wie die Leitfähigkeit, der gelöste Sauerstoff, der pH-Wert, der CO₂-Wert und/oder die Trübung messbar ist. Die Messsonde ist über ein Kabel, vorzugsweise ein Koaxialkabel, mit einem Transmitter verbunden, der einen Prozessor aufweist und an den mehrere Messsonden angeschlossen sein können. Die Speichereinheit ist vorzugsweise ein überschreibbarer Festspeicher, beispielsweise ein EEPROM vom Typ Dallas Semiconductor DS 2433.

Erfindungsgemäss weist die Messsonde einen Erddraht und einen mit der Speichereinheit verbundenen ersten Signaldraht auf, über den sowie über einen dazu korrespondierenden Signaldraht des daran angeschlossenen Kabels, entsprechend einem Übertragungsprotokoll durch den Prozessor steuerbar, unidirektional das analoge oder digitale Messsignal der Messsonde sowie vorzugsweise bidirektional aus der Speichereinheit gelesene oder in diese zu schreibende digitale Betriebsdaten zwischen der Messsonde und dem Transmitter übertragbar sind. Über den Signaldraht und die Erdverbindung der Messsonde und den Signaldraht und die Erdverbindung des daran angeschlossenen Kabels sind daher das analoge oder digitale Messsignal sowie Betriebsdaten übertragbar.

Dadurch resultieren verschiedene Vorteile. Insbesondere resultiert ein reduzierter Installationsaufwand, da anstelle eines mehradrigen Kabels nur ein Kabel, vorzugsweise ein Koaxialkabel, mit dem Signaldraht und, sofern die Erdverbindung nicht anderweitig realisiert wird, der Erddraht notwendig ist. Der vorliegende Begriff "Draht" umfasst hierin nebst Drähten im eigentlichen Sinne physikalische elektrische Verbindungen jeder Art. Ferner können installierte Messsonden vom Transmitter oder vorzugsweise sogar vom Leitrechner zentral erfasst werden. Jede Messsonde kann dabei einen eigenen vorzugsweise weltweit individuellen Identifikationscode aufweisen, dem vorzugsweise Produkteigenschaften zugeordnet sind. In Segmenten beispielsweise eines 64-Bit Codes kann beispielsweise der Probentyp (z.B. pH-Sonde) und die Serienummer dieses Probentyps registriert sein. Anhand des Identifikationscodes gelingt daher eine einfache Verwaltung aller Messsonden der Anlage. Beispielsweise kann der Leitrechner auf eine Datenbank zugreifen, in der alle Daten des betreffenden Probentyps registriert sind. Beispielsweise können alle Leistungsmerkmale, Konfigurationsdaten und Betriebsparameter oder Betriebsprogramme registriert sein, die durch den Hersteller vorzugsweise periodisch aktualisiert werden. Möglich, jedoch mit grösserem Aufwand verbunden ist die dezentrale Ablage dieser Daten in der oder einer der Speichereinheiten der Messsonde.

In einer vorzugsweisen Ausgestaltung ist der erste Signaldraht mit der Referenzelektrode und ein zweiter Signaldraht mit der Messelektrode oder der erste Signaldraht mit der Messelektrode und der zweite Signaldraht mit der Referenzelektrode einer der pH-Messung dienenden Messsonde verbunden, wobei die Signale der Messelektrode und der Referenzelektrode gegebenenfalls über einen Impedanzwandler in analoger Form zum Transmitter übertragbar und dort gegebenenfalls mittels eines Differenzverstärkers auswertbar sind. Eine solche Anordnung erlaubt die Auswertung der analogen Messsignale im Transmitter, wobei nur ein zusätzlicher Signaldraht erforderlich ist. D.h., mit zwei Signaldrähten können zwei analoge Messsignale sowie digitale Betriebsdaten übertragen werden.

Diese Ausgestaltung der Vorrichtung wird vorzugsweise mittels eines Koaxialverbinders realisiert, der drei konzentrisch zueinander verlaufende ringförmige, hülsenförmige, zylinderförmige, büchsenförmige, scheibenförmige und/oder kolbenförmige Kontakte aufweist, die durch Isolationsschichten voneinander getrennt und über einen weiteren dazu korrespondierenden Koaxialverbinder derart mit dem Kabel verbindbar sind, dass der erste Signaldraht mit dem Innenleiter, der zweite Signaldraht mit dem inneren Schirmleiter und der Erddraht mit dem äusseren Schirmleiter des mit dem Transmitter verbundenen Koaxialkabels verbunden ist.

Diese Ausgestaltung der Erfindung erlaubt es einen konventionellen Koaxialverbinder, wie er für Messsonden bisher verwendet wurde, dahingehend zu erweitern, dass anstelle nur eines Schirmleiterkontakts zwei getrennte Schirmleiterkontakte resultieren. Dabei wird der ursprüngliche Schirmleiterkontakt in zwei voneinander getrennte Kontaktsegmente derart aufgeteilt, dass der resultierende 3-polige Koaxialverbinder der Messsonde mit einem konventionellen 2-poligen Koaxialverbinder eines an den Transmitter angeschlossenen Kabels verbindbar ist. Durch den konventionellen 2-poligen Koaxialverbinder werden dabei die beiden Schirmleiterkontakte des 3-poligen Koaxialverbinders kurzgeschlossen, weshalb die mit diesen kurzgeschlossenen Kontakten verbundene Speichereinheit der Messsonde nicht in die Messvorrichtung eingebunden wird. Neue Messsonden sind daher zu konventionellen Anlagen kompatibel und können bereits eingesetzt werden, bevor die Anlage selbst erweitert wird.

In einer weiteren vorzugsweisen Ausgestaltung ist in der Messsonde ein gegebenenfalls über einen Parallel-Seriell-Wandlerbaustein (beispielsweise vom Typ Dallas Semiconductor DS 2408) mit dem ersten Signaldraht verbundener, gegebenenfalls integral mit der wenigstens einen Speichereinheit versehener Prozessor vorgesehen, durch den mittels der Messsonde gewonnene und digitalisierte Messsignale auswertbar und gegebenenfalls dazu korrespondierende digitale Daten in die wenigstens eine Speichereinheit schreibbar oder aus dieser auslesbar sind und/oder durch den die Messsonde entsprechend den vom Transmitter zugeführten Betriebsdaten konfigurierbar und/oder steuerbar ist.

Durch diese Massnahmen können wesentliche Teile der Mess- und Diagnoseprozesse innerhalb der Messsonde selbst kontrolliert werden, wodurch die zentralisierten Systeme entlastet und die Leistungsfähigkeit und Flexibilität der Anlage signifikant erhöht wird. Insbesondere der Aufbau und die zentral steuerbare Verwaltung und Wartung werden vereinfacht. Durch Steuerung von Betriebsparametern können die Messsonden an geänderte Prozessbedingungen angepasst und optimiert werden. Besonders vorteilhaft sind auch steuerbare Messsonden einsetzbar, die bedarfsweise konfiguriert werden. Beispielsweise wird in der Messsonde ein steuerbarer Spannungsgenerator (beispielsweise vom Typ Dallas Semiconductor DS 2890) verwendet, mittels dessen beispielsweise für Sauerstoff-Messsonden eine Polarisationsspannung wahlweise einstellbar ist.

Die Architektur der digital arbeitenden Module der Messvorrichtung kann beliebig gewählt sein. Beispielsweise wird innerhalb der Messsonde und zwischen der Messsonde und dem Transmitter konsequent eine 1-Draht Busarchitektur verwendet. Dabei kann der vorzugsweise im Transmitter vorgesehene Masterprozessor den vorzugsweise in der Messsonde vorgesehenen Slave-Prozessor steuern und vorzugsweise auf alle anderen digitalen 1-Drahtmodule, die vorzugsweise je eine weltweit eindeutige Adresse aufweisen, zugreifen, insbesondere Daten aus der wenigstens einen Speichereinheit auslesen. Der Sonden-Prozessor wird dabei vorzugsweise Daten, beispielsweise Zustandsdaten der Messsonde, aufbereiten und in der Speichereinheit ablegen, die typischerweise zyklisch durch den Leitrechner bzw. den Transmitter abgefragt werden. Sofern der Master-Prozessor über einen Parallel-Seriell-Wandlerbaustein mit dem Sonden-Prozessor verbunden ist, kann dieser vorzugsweise mit wenigstens einer Speichereinheit in eine weitgehend autonome Mehr-Bit Umgebung eingebettet sein. In diesem Fall würden vorzugsweise nur der Master- und der Slave- bzw. Sonden-Prozessor miteinander kommunizieren.

Die Kommunikation über den 1-Draht-Bus erfolgt gemäss einem Datenübertragungsprotokoll, beispielsweise wie es in [6], US 5'809'518 beschrieben ist.

In einer weiteren bevorzugten Ausgestaltung der Erfindung sind die Messelektrode und die Referenzelektrode der pH-Messsonde über je einen Impedanzwandler mit separaten Eingängen eines Multiplexers verbunden. Alternativ sind die Messelektrode und die Referenzelektrode der pH-Messsonde über je einen Impedanzwandler mit den separaten Eingängen des Multiplexers verbunden, wobei die Ausgänge der Impedanzwandler zusätzlich mit den Eingängen eines Differenzverstärkers verbunden sind, dessen Ausgang mit einem weiteren Eingang des Multiplexers verbunden ist. Durch den Differenzverstärker wird aus den Messsignalen der Messelektrode und der Referenzelektrode ein der gemessenen Prozessgrösse bzw. dem pH-Wert entsprechendes Messsignal gebildet, das nach der Digitalisierung über den 1-Draht-Bus zum Transmitter übertragen werden kann. Sofern kein analoger Differenzverstärker vorgesehen ist, erfolgt die Differenzbildung digital innerhalb des in der Messsonde vorgesehenen Prozessors. Messsignalen der Messelektrode und der Referenzelektrode können in beiden Fällen (mit oder ohne Differenzverstärker) separat ausgewertet werden, um den Zustand der Messsonde zu prüfen.

Dazu werden vom Prozessor der Messsonde oder eines dadurch gesteuerten Frequenzgenerators Testsignale, wie Rechtecksignale einer ersten oder einer ersten und einer zweiten Frequenz, erzeugt und der Messelektrode und/oder der Referenzelektrode zugeführt, wobei die resultierenden Spannungsverläufe an jeder Elektrode mittels des Prozessors der Messsonde auswertet werden, um Zustandsdaten der Messsonde zu gewinnen und gegebenenfalls in der Speichereinheit zu speichern.

In einer weiteren vorzugsweisen Ausgestaltung ist in der Messsonde ein Temperatursensor mit einem weiteren Eingang des Multiplexers verbunden, anhand dessen Temperaturdaten der Messsonde oder des die Messsonde umgebenden Mediums ermittelt und mittels des Prozessors der Messsonde gegebenenfalls in der Speichereinheit gespeichert oder selbst ausgewertet werden, um Belastungen bzw. den Zustand der Messsonde und/oder Korrekturgrössen für die Messsignale zu ermitteln. An Messsonden, die für die Überwachung chemischer oder mikrobiologischer Prozesse eingesetzt werden, können nämlich Verschmutzungen auftreten, die zu einer Verfälschung des Messergebnisses führen. Verschmutzungen sind daher nicht nur im Rohrleitungssystem, sondern auch an den Messsonden zu beseitigen, um korrekte Messergebnisse und gleichzeitig den hygienisch einwandfreien Zustand der Anlage zu gewährleisten. Aufgrund der hohen Anzahl verwendeter Messsonden werden diese normalerweise nicht ausgebaut und gereinigt, sondern in einem CIP-(Cleaning In Place) oder SIP- (Sterilizing In Place) Verfahren gereinigt bzw. sterilisiert.

Zur Ermittlung der resultierenden Belastung der Messsonden wird vorzugsweise die Temperatur mit wenigstens einem Schwellwert verglichen und nach Überschreiten dieses Schwellwerts
a) eine entsprechende Belastung registriert,
b) die Summe aller Belastungen ermittelt und/oder
c) die Summe aller Belastungen ermittelt und durch Vergleich mit einem Maximalwert der zulässigen Belastungen eine zulässige Restbelastung oder Restlebensdauer berechnet.

Beispielsweise wird nach Feststellung einer Belastung die registrierte Restlebensdauer der Messsonde entsprechend reduziert. Die zulässige Restbelastung oder Restlebensdauer entspricht beispielsweise der Anzahl noch zulässiger CIP- oder SIP-Prozesse.

Entsprechende Zustandsdaten und/oder Belastungsdaten werden entweder direkt übertragen, vorzugsweise jedoch in der Speichereinheit abgelegt und durch den Transmitter oder den Leitrechner abgefragt. Sofern eine Fehlfunktion der Messsonde festgestellt wird, wird dies vorzugsweise unverzüglich signalisiert. Beispielsweise folgt innerhalb kurzer Intervalle zyklisch eine Statusabfrage, durch die Fehlermeldungen (z.B. ein gesetztes Fehlerbit) abgefragt werden.

Die Betriebsdaten, die von der Messsonde zum Transmitter und gegebenenfalls weiter zum Leitrechner übertragbar sind, umfassen daher vorzugsweise Identifikationsdaten, Kenndaten, Konfigurationsdaten, Zustandsdaten der Messsonde, insbesondere während des Betriebs der Messsonde ermittelte Testdaten, und/oder Belastungsdaten.

Zur Messsonde übermittelte Betriebsdaten umfassen vorzugsweise aktualisierte Konfigurationsdaten und/oder Steuerdaten umfassen, mittels derer die Messsonde konfigurierbar und/oder steuerbar ist.

Wie oben ausgeführt, ist die Anwendung der erfindungsgemässen Lösung nicht auf bestimmte Messsonden beschränkt, sondern kann bei beliebigen Messsonden mit einer oder mehreren Elektroden, wie Mess- und Referenzelektroden bzw. Messfühlern eingesetzt werden.

Die erfindungsgemässen Messsonden oder Messfühler sind zudem nicht nur in industriellen Anlagen, sondern auch im Messlabor vorteilhaft verwendbar.

Nachfolgend wird die Erfindung anhand von Zeichnungen näher erläutert. Dabei zeigt:
- Figur 1: eine einstufige, nach dem erfindungsgemässen Verfahren arbeitende Anlage mit einem Behältnis 8; 81, 82 und drei darin integrierten Messsonden 1a, 1b, 1c, die über Ein- oder Zweisignaldrahtleitungen 2a, 2b, 2c und Transmitter 3a, einen Segmentkoppler 30 und ein Bussystem mit einem Leitrechner 300 verbunden sind;
- Figur 2: eine erfindungsgemässe Messvorrichtung mit einer erfindungsgemässen Messsonde 1, die in eine zu messende Flüssigkeit 6 eingetaucht und über eine Ein- oder Zweisignaldrahtleitung 2 mit einem Transmitter 3 verbunden ist;
- Figur 3: die Messvorrichtung von Figur 2 in einer vorzugsweisen Ausgestaltung;
- Figur 4: konventionelle 2-polige Koaxialverbinder 20KF und 20KM, mittels derer eine konventionelle Messsonde mit einem konventionellen Transmitter 3 verbindbar ist;
- Figur 5: erfindungsgemässe 3-polige Koaxialverbinder 20F und 20M, mittels derer eine erfindungsgemässe Messsonde 1 mit einem Transmitter 3 verbindbar ist;
- Figur 6: eine erfindungsgemässe Messvorrichtung mit einer erfindungsgemässen Messsonde 1, die einen mit der Speichereinheit MEM versehenen Prozessor MP_{S} aufweist, der über eine Einsignaldrahtleitung 21 mit einem erfindungsgemässen Transmitter 3 verbunden ist; und
- Figur 7: die Messvorrichtung von Figur 6 mit einem Prozessor MP_{S}, in den ein Multiplexer MUX und ein A/D Wandler A/D integriert sind und der über die Einsignaldrahtleitung 21 mit Speichereinheiten MEM1, MEM2, ... und mit einer steuerbaren Spannungsquelle POT verbunden ist.

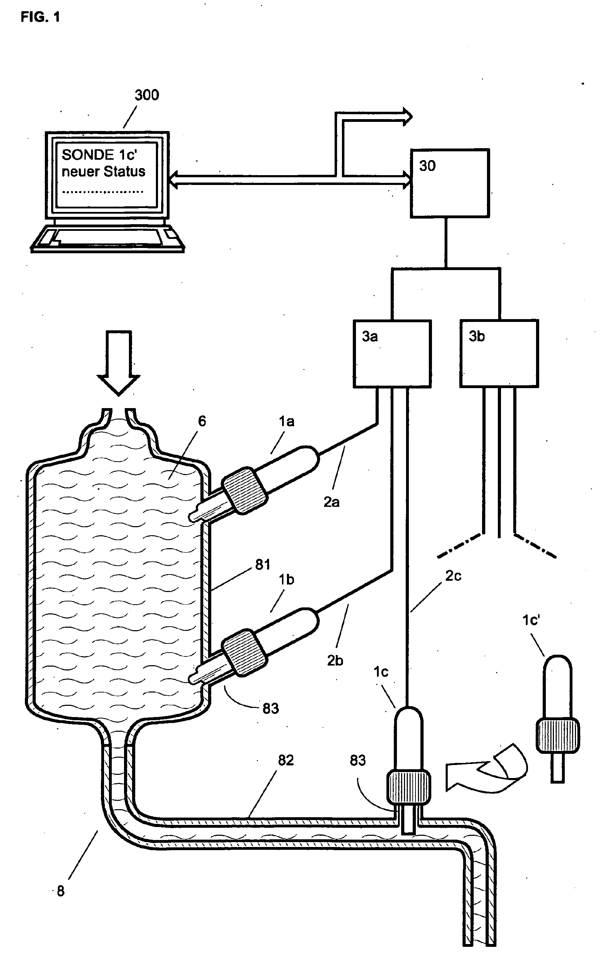

Figur 1 zeigt eine Anlage mit einem Behältnis 8 bestehend aus einem mit einem Prozessgut 6 gefüllten Behälter 81, der mittels eines Verbindungsrohrs 82 gegebenenfalls mit einer Anlageneinheit einer nächsten Prozessstufe verbunden ist. Die Eigenschaften des Prozessguts 6 werden mittels erfindungsgemässen Messsonden 1a, 1b, 1c, gemessen, die über Ein- oder Zweisignaldrahtleitungen 2a, 2b, 2c, d.h. Kabel mit einem oder zwei Signaldrähten bzw. elektrischen Verbindungen für Signale und einem Erddraht bzw. einer Erdverbindung, mit einem Transmitter 3a bzw. 3b verbunden sind, der beispielsweise als Auswerteeinheit, als Messumformer oder im einfachsten Fall als Vermittlungsstation dient, welche Daten über einen Segmentkoppler 30 mit dem Leitrechner 300 austauscht.

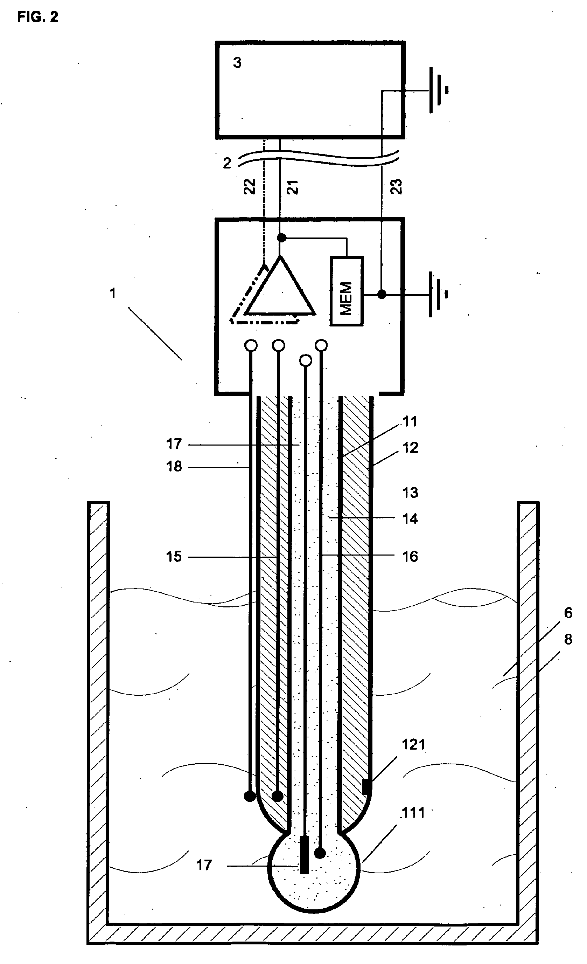

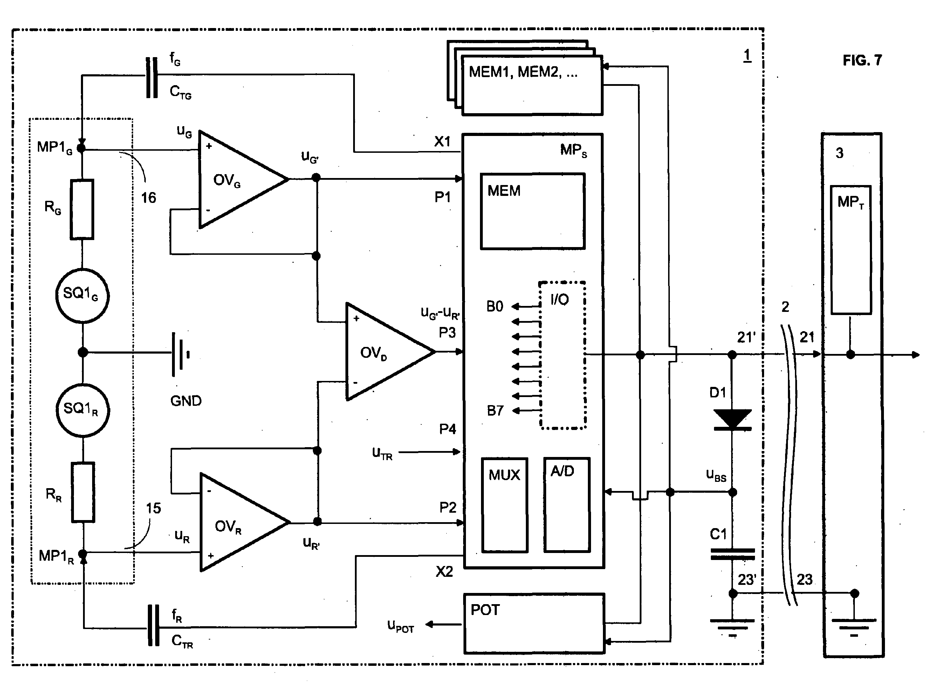

Der prinzipielle Aufbau einer erfindungsgemässen pH-Messsonde, die als Einstabmesskette eine Messelektrode in Form einer Glaselektrode, eine Referenzelektrode und eine gegebenenfalls vorgesehene Hilfselektrode 18 umfasst, ist in Figur 2 schematisch gezeigt. In der Messsonde 1 sind die mit einem Ableitelement 16 versehene Glaselektrode und die mit einem Bezugselement 15 versehene Referenzelektrode konstruktiv zusammengebaut. Das Ableitelement 16 ist in einer ersten Kammer innerhalb eines Innenrohrs 11 und einer daran anschliessenden dünnwandigen Glashalbkugel bzw. Glasmembran 111 in eine Lösung mit definiertem pH-Wert bzw. einen Innenpuffer 14 getaucht, der die leitfähige Verbindung zwischen der Innenseite der Glasmembran 111 und dem Ableitelement 16 erstellt. Das Bezugselement 15 ist innerhalb eines Aussenrohrs 12 in einen Elektrolyten bzw. einen Aussenpuffer 13 eingetaucht, der durch eine poröse Trennwand bzw. ein Diaphragma 121 langsam in das Messgut 6 diffundiert. Das Spannungspotential, das während der Messung am Ableitelement 16 entsteht (siehe Figur 7, Signalquelle SQ1_{G}) und das Spannungspotential, das während der Messung am Bezugselement 15 entsteht (siehe Figur 7, Signalquelle SQ1_{R}) wird über Impedanzwandler und die zwei Signaldrähte 21, 22 des Kabels 2 zum Transmitter 3 übertragen. Die Messsonde weist ferner eine Speichereinheit MEM auf, die über einen der Signaldrähte 21 mit dem Transmitter verbunden ist.

Im Innenpufferraum ist in dieser Ausgestaltung der Messsonde ferner ein Temperaturmessfühler 17 angeordnet, mittels dessen in weiteren vorzugsweisen Ausgestaltungen der Messsonde 1 die Durchführung einer automatischen Kompensation von Temperatureinflüssen und die Erfassung von Temperaturzyklen realisierbar sind.

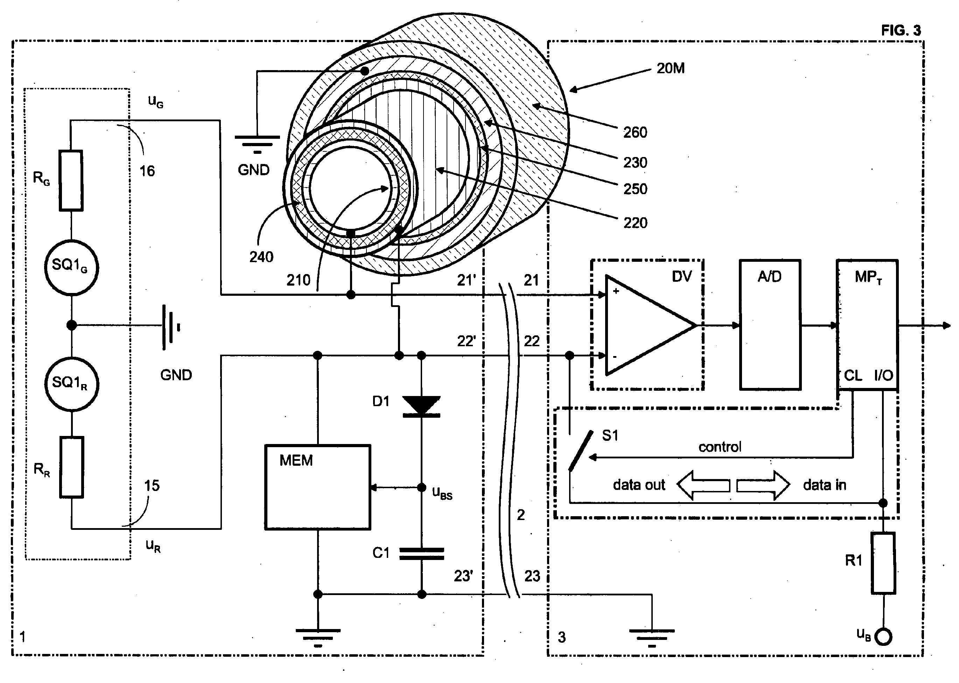

Figur 3 zeigt die Messvorrichtung von Figur 2 in einer vorzugsweisen Ausgestaltung mit einer pH-Messsonde 1, die eine Glaselektrode und eine Referenzelektrode aufweist, an denen die Spannungen u_{G} bzw. u_{R} auftreten, sobald die Messsonde 1 in das Prozessgut bzw. Messgut eingetaucht wird. Das Messgut 6 und die Glasmembran 111 bilden dabei die Spannungsquelle SQ1, deren Innenwiderstand hauptsächlich durch den hohen Widerstand R_{G} der Glasmembran 111 bestimmt wird. Die Spannungen u_{G} und u_{R} werden über die Signaldrähte 21, 22 des Kabels 2 zu den Eingängen eines im Transmitter 3 vorgesehenen Differenzverstärkers DV übertragen, dessen Ausgang über einen Analog/Digital-Wandler A/D mit einem Prozessor MP_{T} verbunden ist. In der Messsonde 1, die ferner über einen Erddraht 23 mit dem Transmitter 3 verbunden ist, ist eine Speichereinheit MEM (beispielsweise ein EEPROM vom Typ Dallas Semiconductor DS 2433) vorgesehen, der in dieser Ausgestaltung über den als Datenbus dienenden zweiten Signaldraht 22', 22 mit dem im Transmitter 3 vorgesehenen Prozessor MP_{T} verbunden ist. Der Prozessor MP_{T} operiert dabei als Bus-Master, der die mit einer eindeutigen Adresse versehene Speichereinheit MEM adressieren und mit ihr Daten austauschen kann. Nachdem der gezeigte Schalter S1 vom Prozessor MP_{T} durch ein über einen Steuerausgang CL abgegebenes Steuersignal geschlossen wurde, können Daten über den zweiten Signaldraht 22', 22 zwischen dem Datenport "I/O" und der Speichereinheit MEM in der Messsonde 1 übertragen werden. Während der Übertragung von analogen Messsignalen bleibt der Schalter S1 hingegen geöffnet.

Gemäss Übertragungsprotokoll ist nach der Initialisierung der Schaltung eine sequentielle Datenübertragung vorgesehen. Der als Bus-Master aktive Prozessor MP_{T} kann dabei jeden am Signaldraht 22', 22 bzw. am Datenbus 22', 22 anliegenden Baustein adressieren und ihm Daten zusenden und/oder von ihm Daten empfangen. Beispielsweise sind aus einem ROM-Baustein nur Daten auslesbar, in ein EEPROM sind Daten einschreibbar und wieder auslesbar, einer steuerbaren Spannungsquelle POT (siehe Figur 7) können Steuersignale zugeführt werden um ein Spannungspotential einzustellen. Ferner können auch steuerbare Schalter vorgesehen sein, mit denen beispielsweise Sensoren oder Elektroden zu - oder umschaltbar sind.

Die für den Betrieb der Speichereinheit MEM und gegebenenfalls weiterer Bauelemente erforderliche Spannung u_{BS} wird mittels einer Diode D1, die einen Kondensator C1 lädt, parasitär dem Datenbus 22, 22' entnommen sobald daran eine Logikspannung anliegt, die von einer Spannungsquelle U_{B} über einen Widerstand R1 und den geschlossenen Schalter S1 zugeführt wird.

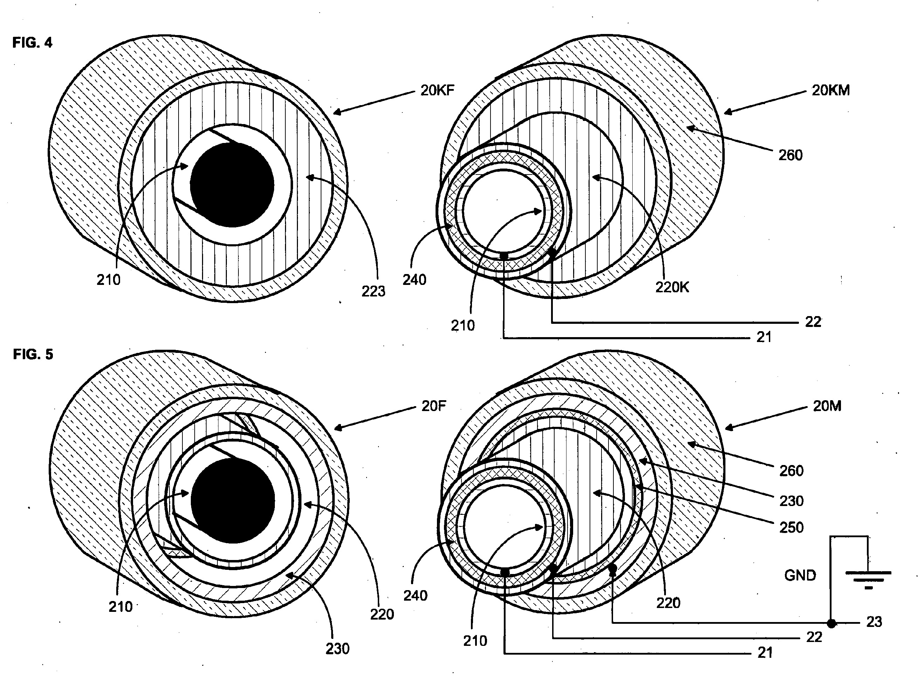

Die innerhalb der Messsonde 1 geführten beiden Signaldrähte 21', 22' und der Erddraht 23' sind an die durch Isolationsschichten 240, 250 voneinander getrennten Kontakte 210, 220, 230 eines dreipoligen Koaxialverbinders 20M angeschlossen, der über einen weiteren Koaxialverbinder 20F (siehe Figur 5) derart mit Koaxialkabel 2 verbindbar ist, dass der erste Signaldraht 21' mit dem Innenleiter 21, der zweite Signaldraht 22' mit dem inneren Schirmleiter 22 und der Erddraht 23' mit dem äusseren Schirmleiter 23 des Koaxialkabels 2 verbunden ist. Die beiden äusseren Kontakte 220, 230 des Koaxialverbinders 20M liegen segmentweise in derselben Ebene und sind durch die Isolationsschicht 250 voneinander getrennt, so dass sie mit den korrespondierenden Kontakten des weiteren Koaxialverbinders 20F verbindbar sind, wenn die Koaxialverbinder 20M, 20F ineinander verschoben werden. Die beiden Koaxialverbinder 20M, 20F gewährleisten daher eine einwandfrei dreipolige Verbindung.

In vielen konventionellen Anlagen sind hingegen oft noch zweipolige Verbindungen zwischen der Messsonde 1 und dem Transmitter 3 und entsprechende zweipolige Koaxialverbinder 20KF und 20KM vorgesehen, wie sie in Figur 4 gezeigt sind.

Der erfindungsgemässe dreipolige Koaxialverbinder 20M von Figur 3 und Figur 5 kann nun mechanische und elektrisch sowohl mit dem dreipoligen Koaxialverbinder 20F von Figur 5 und dem zweipoligen Koaxialverbinder 20KF (aus Figur 4) verbunden werden, wobei die beiden Schirmleiterkontakte 220 und 230 des dreipoligen Koaxialverbinders 20M am Schirmleiterkontakt 223 des zweipoligen Koaxialverbinders 20KF anliegen und durch diesen miteinander verbunden werden. Eine erfindungsgemässe Messsonde 1 kann daher über den dreipoligen Koaxialverbinder 20M und den zweipoligen Koaxialverbinder 20KF an einen konventionellen Transmitter angeschlossen werden, der nicht für die Übertragung digitaler Daten zur Messsonde 1 ausgelegt ist. Die Speichereinheit MEM wird in diesem Fall nicht verwendet.

Der Hersteller kann daher für konventionelle und erfindungsgemässe Messvorrichtungen bzw. Anlagen lediglich eine Art von Messsonden produzieren, die universell verwendbar ist. Der Anwender hat dabei den Vorteil, dass er erfindungsgemässe Messsonden einkaufen und bereits einsetzen kann, bevor seine Anlage auf den erfindungsgemässen Stand erweitert wird.

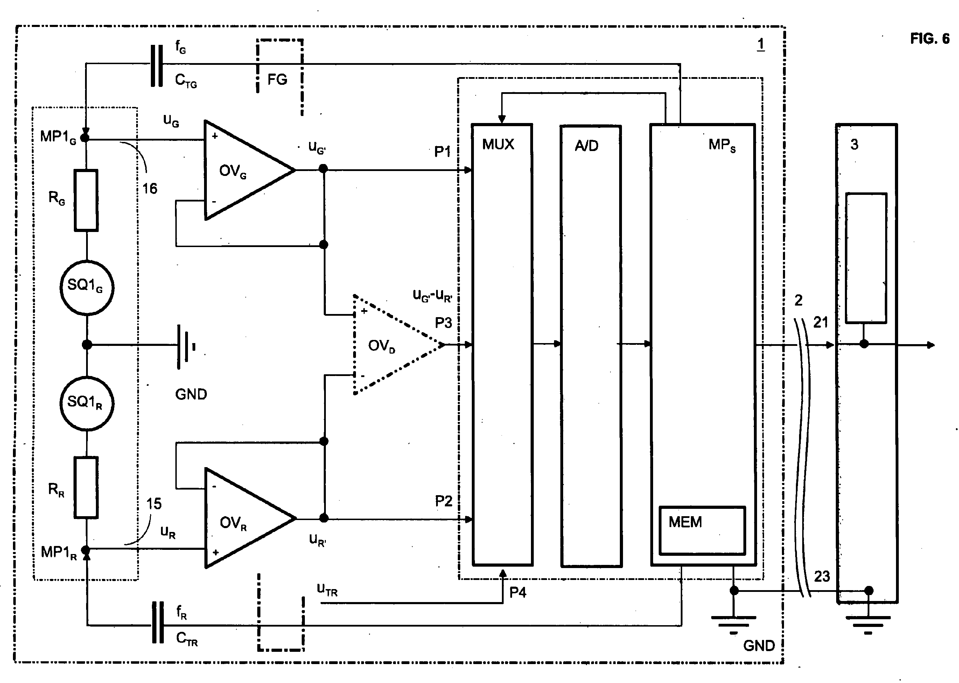

Figur 6 zeigt eine erfindungsgemässe Messvorrichtung mit einer erfindungsgemässen Messsonde 1, die einen mit der Speichereinheit MEM versehenen Prozessor MP_{S} aufweist, der über eine Einsignaldrahtleitung 21 und die Erdleitung 23 eines Kabels 2 mit einem erfindungsgemässen Transmitter 3 verbunden ist. Im Transmitter 3 ist der als Bus-Master dienende Prozessor MP_{T} vorgesehen, der über die als Datenbus dienende Einsignaldrahtleitung 21 mit dem Slave- bzw. Sonden-Prozessor MP_{S} Daten austauschen kann.

Dem Sonden-Prozessor MP_{S} sind über einen von ihm gesteuerten Multiplexer MUX und einen daran anschliessenden Analog/Digital-Wandler A/D die in der Messsonde 1 gewonnen Messsignale u_{G'}, u_{R'}, u_{G'}-u_{R'} und u_{TR} sequentiell zuführbar. Der Multiplexer MUX, der Analog/Digital-Wandler A/D und der Sonden-Prozessor MP_{S} können dabei natürlich auch in einem Gehäuse integriert sein.

Die Glaselektrode und die Referenzelektrode der der pH-Messung dienenden Messsonde 1 sind über je einen Impedanzwandler OV_{G}, OV_{R} dabei mit dem ersten bzw. zweiten Eingang P1; P2 des Multiplexers MUX verbunden, wobei die Ausgänge der Impedanzwandler OV_{G}, OV_{R} vorzugsweise zusätzlich mit den Eingängen eines Differenzverstärkers OV_{D} verbunden sind, dessen Ausgang mit dem dritten Eingang P3 des Multiplexers MUX verbunden ist. Am vierten Eingang P4 des Multiplexers MUX liegt das Signal u_{TR} eines Temperaturfühlers an (z.B. vom Typ PT100).

Das digitalisierte Differenzsignal u_{G'}-u_{R'} oder die gegebenenfalls mittels des Sonden-Prozessors MP_{S} gebildete Differenz der digitalisierten einzelnen Messsignale u_{G'}, u_{R'}, korrespondiert zum pH-Wert des Messguts 6 und kann vom Sonden-Prozessor MP_{S} ohne weitere Verarbeitung oder mit einer gegebenenfalls notwendigen Korrektur zum Transmitter 3 gesandt und/oder in der Speichereinheit MEM abgelegt werden, die in dieser Ausgestaltung der Erfindung in den Sonden-Prozessor MP_{S} integriert ist.

Die Auswertung der weiteren Messsignale u_{G'}, u_{R'} erlaubt die Feststellung des Zustands der Messsonde 1. Dazu werden mittels des Sonden-Prozessors MP_{S}, des Transmitter-Prozessors MP_{T} oder eines dadurch gesteuerten Frequenzgenerators FG (schematisch gezeigt) Testsignale f_{G}, f_{R}, wie Rechtecksignale einer ersten oder einer ersten und einer zweiten Frequenz, erzeugt und je der Glaselektrode und der Referenzelektrode zugeführt. Die resultierenden Spannungsverläufe u_{G'}, u_{R'} an den Elektroden, die von deren Innenwiderständen R_{G} bzw. R_{R} abhängen, werden mittels des Sonden-Prozessors MP_{S} ausgewertet, um Zustandsdaten der Messsonde 1 zu gewinnen, die vorzugsweise in der Speichereinheit MEM gespeichert und/oder sofort zum Transmitter 3 übertragen werden. Falls beispielsweise ein Glasbruch oder eine starke Verschmutzung aufgetreten ist, verändern sich die Innenwiderstände R_{G} bzw. R_{R} und die entsprechenden Verläufe der Spannungen u_{G'}, u_{R'}, weshalb eine Betriebsabweichung oder gar eine Fehlfunktion registriert und/oder dem Transmitter 3 oder dem Zentralrechner 300 gemeldet werden kann.

Anhand des an den Multiplexer MUX angeschlossen Temperaturmessfühlers 17 können Temperaturdaten der Messsonde 1 oder des die Messsonde 1 umgebenden Mediums 6 ermittelt und mittels des Sonden-Prozessors MP_{S} in der Speichereinheit MEM gespeichert oder selbst ausgewertet werden, um Belastungen bzw. den Zustand der Messsonde und/oder Korrekturgrössen für die Messsignale zu ermitteln.

Mittels der in die Messsonde 1 integrierten Diagnosevorrichtung können daher Störungen und Defekte sowie die Alterung bzw. Belastungen der Messsonde 1 erfasst und registriert, gegebenenfalls unverzüglich gemeldet werden.

Besonders vorteilhaft bei dieser Ausgestaltung der Erfindung ist, dass die Mess- und Diagnosefunktionen in der Messsonde 1 weitgehend autonom durchgeführt werden können. Dabei wird vermieden, dass Testsignale vom Transmitter 3 über separate Leitungen zur Messsonde 1 und gegebenenfalls zurück übertragen werden müssen. Es resultiert somit eine einfach installierbare Messsonde 1 mit breiter Funktionalität.

Figur 7 zeigt die Messvorrichtung von Figur 6 mit einem Sonden-Prozessor MP_{S}, in den ein Multiplexer MUX und ein A/D Wandler A/D integriert sind, und der über die Einsignaldrahtleitung 21 mit Speichereinheiten MEM1, MEM2, ..., mit einer steuerbaren Spannungsquelle POT sowie mit dem Master-Prozessor MP_{T} im Transmitter 3 verbunden ist.

Der Master-Prozessor MP_{T} kann vorzugsweise mit allen am Eindrahtbus 21, 21' anliegenden Modulen kommunizieren. Vorzugsweise wird im Betriebsprotokoll vorgesehen, dass der Sonden-Prozessor MP_{S} während einer reservierten Zeitperiode lokal in der Messsonde 1 oder global in der Messsvorrichtung hinsichtlich des Eindrahtbusses 21, 21' als Master-Prozessor aktiv sein kann, um beispielsweise Daten in den Speichereinheiten MEM1, MEM2, ..., abzulegen oder Daten und Programme aus diesen auszulesen. Die Speichereinheiten MEM1, MEM2, ..., können dadurch im Timesharing-Betrieb die Speichereinheiten MEM1, MEM2, ... nutzen. Vorzugsweise arbeitet der Sonden-Prozessor MP_{S} bei der Initialiserung als lokaler Master, so dass er beispielsweise aus der Speichereinheit MEM1 ein vom Leitrechner 300 zur Verfügung gestelltes, gegebenenfalls aktualisiertes Betriebsprogramm in den internen Speicher MEM übernehmen kann. Auf diese Weise kann sichergestellt werden, dass die installierten Messsonden 1 stets auf dem aktuellsten Stand der Technik sind, der vom Hersteller zur Verfügung gestellt wird.

Schematisch ist in Figur 7 ferner gezeigt, dass in einer weiteren vorzugsweisen Ausgestaltung ein Sonden-Prozessor MP_{S} höherer Bitbreite (z.B. ein 8-Bit Prozessor) über einen Parallel-Seriell-Wandlerbaustein (beispielsweise vom Typ Dallas Semiconductor DS 2408) mit dem Eindrahtbus 21', 21 verbunden werden kann, wodurch hinsichtlich der verwendbaren Prozessoren eine höhere Flexibilität resultiert.

Die Vorteile der erfindungsgemässen Messvorrichtung treten bei globaler Betrachtung einer komplexen Anlage (auszugsweise in Figur 1) besonders deutlich hervor. Einerseits reduziert sich aufgrund der Verwendung erfindungsgemässer Messsonden 1 die gesamte Infrastruktur für die Daten- und Signalübertragung. Ferner resultieren grosse Vorteile beim Aufbau, bei der Verwaltung und Wartung der Anlage.

Beim Aufbau der Anlage können Messsonden 1 eingesetzt und verkabelt werden, wonach sie zentral automatisch erfasst, identifiziert und registriert werden können. Die Messsonden werden daher nicht nur messtechnisch, sondern auch verwaltungstechnisch in die Prozessführung einbezogen.

Durch Registrierung des Zustands der Messsonden 1 resultiert eine erhöhte Prozesssicherheit. Hinsichtlich der Verwaltung lassen sich die Wartungsarbeiten, einschliesslich der Bestellung und Lagerung der minimal erforderlichen Ersatzsonden präzise planen. Durch die Möglichkeit die eingesetzten Messsonden 1 online neu zu konfigurieren, gegebenenfalls sogar mit Betriebsprogrammen zu versehen, resultiert eine hohe Flexibilisierung der Anlage, die sich leichter an geänderte Prozesse anpassen lässt. Nach dem Ersatz der Messsonde 1c durch die Messsonde 1c' kann im Leitrechner 300 unverzüglich eine Überprüfung durchgeführt werden. Der Zustand der Messsonde 1c' kann ferner auf dem Transmitter 3 oder, beispielsweise mittels Leuchtdioden, auf der Messsonde 1 c' selbst signalisiert werden.

### Literaturverzeichnis

- [1]: "Process Measurement Solutions Catalog 2005/06", Mettler-Toledo GmbH, CH-8902 Urdorf
- [2]: Prozessanalytische Systemlösungen für die Brauerei, Firmenschrift der Mettler-Toledo GmbH, CH-8902 Urdorf, Art. Nr. 52 900 309, Druckdatum 09/2003
- [3]: EP 1550 861 A1
- [4]: WO 92/21962
- [5]: EP 0 419 769 A2
- [6]: EP 0 497 994 A1
- [7]: US 5'809'518

## Patentansprüche

1. Messvorrichtung mit wenigstens einer mit einer oder mehreren Speichereinheiten (MEM; MEM1, MEM2) versehenen Messsonde (1), insbesondere einer physikalischen oder elektro-chemischen Messsonde, die über ein Kabel (2), vorzugsweise ein Koaxialkabel, mit einem Transmitter (3) verbunden ist, der einen Prozessor (MP_{T}) aufweist, **dadurch gekennzeichnet, dass** die Messsonde (1) einen Erddraht (23') und einen mit der Speichereinheit (MEM; MEM1, MEM2) verbundenen ersten Signaldraht (21') aufweist, über den sowie das daran angeschlossene Kabel (2), entsprechend einem Übertragungsprotokoll durch den Prozessor (MP_{T}) steuerbar, unidirektional das analoge oder digitale Messsignal der Messsonde (1) sowie vorzugsweise bidirektional aus der Speichereinheit (MEM; MEM1, MEM2) gelesene oder in diese zu schreibende digitale Betriebsdaten zwischen der Messsonde (1) und dem Transmitter (3) übertragbar sind.

2. Messvorrichtung nach Anspruch 1, **dadurch gekennzeichnet, dass** der erste Signaldraht (21') mit der Referenzelektrode und ein zweiter Signaldraht (22') mit der Messelektrode oder dass der erste Signaldraht (21') mit der Messelektrode und der zweite Signaldraht (22') mit der Referenzelektrode einer Messsonde (1), insbesondere einer potentiometrischen Messsonde (1), wie einer der pH-Messung dienenden Messsonde (1), verbunden ist und dass die Signale der Messelektrode und der Referenzelektrode gegebenenfalls über einen Impedanzwandler (OV_{G}, OV_{R}) in analoger Form zum Transmitter (3) übertragbar und dort gegebenenfalls mittels eines Differenzverstärkers (DV) auswertbar sind.

3. Messvorrichtung nach Anspruch 2, **dadurch gekennzeichnet, dass** die Messsonde (1) einen Koaxialverbinder (20F bzw. 20M) mit drei konzentrisch zueinander verlaufenden ringförmigen, hülsenförmigen, zylinderförmigen, büchsenförmigen, scheibenförmigen und/oder kolbenförmigen Kontakten (210, 220, 230) aufweist, die durch Isolationsschichten (220, 240) voneinander getrennt und über einen weiteren dazu korrespondierenden Koaxialverbinder (20M bzw. 20F) derart mit dem Kabel (2) verbunden sind, dass der erste Signaldraht (21') mit dem Innenleiter (21), der zweite Signaldraht (22') mit dem inneren Schirmleiter (22) und der Erddraht (23') mit dem äusseren Schirmleiter (23) des mit dem Transmitter (3) verbundenen Koaxialkabels (2) verbunden ist.

4. Messvorrichtung nach Anspruch 1, **dadurch gekennzeichnet, dass** in der Messsonde (1) ein gegebenenfalls über einen Parallel-Seriell-Wandlerbaustein (I/O) mit dem ersten Signaldraht (21) verbundener, gegebenenfalls integral mit der wenigstens einen Speichereinheit (MEM) versehener Prozessor (MP_{S}) vorgesehen ist, durch den mittels der Messsonde (1) gewonnene Messsignale auswertbar und gegebenenfalls dazu korrespondierende Daten in die wenigstens eine Speichereinheit (MEM; MEM1, MEM2) schreibbar oder aus dieser auslesbar sind und/oder durch den die Messsonde (1) entsprechend den vom Transmitter (3) zugeführten Betriebsdaten konfigurierbar und/oder steuerbar ist.

5. Messvorrichtung nach Anspruch 1 oder 4, **dadurch gekennzeichnet, dass** mittels der Messsonde (1) ermittelte, erste oder weitere Messsignale in der Messsonde (1) direkt oder über wenigstens einen Impedanzwandler (OV_{G}; OV_{R}) und/oder über einen Multiplexer (MUX) einem Analog/Digital-Wandler (A/D) zuführbar sind, dessen digitale Ausgangssignale, entsprechend dem Übertragungsprotokoll durch den im Transmitter (3) und/oder den in der Messsonde (1) vorgesehenen Prozessor (MP_{T}; MP_{S}) steuerbar, zum Transmitter (3) übertragbar oder in der wenigstens einen Speichereinheit (MEM; MEM1, MEM2) speicherbar und wieder abrufbar sind.

6. Messvorrichtung nach Anspruch 2, **dadurch gekennzeichnet, dass** die Messelektrode und die Referenzelektrode einer der pH-Messung dienenden Messsonde (1) über je einen Impedanzwandler (OV_{G}, OV_{R}) mit einem ersten bzw. zweiten Eingang (P1 bzw. P2) eines Multiplexers (MUX) verbunden sind, oder
dass die Messelektrode und die Referenzelektrode der der pH-Messung dienenden Messsonde (1) über je einen Impedanzwandler (OV_{G}, OV_{R}) mit dem ersten bzw. zweiten Eingang (P1 bzw. P2) des Multiplexers (MUX) verbunden sind, wobei die Ausgänge der Impedanzwandler (OV_{G}, OV_{R}) zusätzlich mit den Eingängen eines Differenzverstärkers (OV_{D}) verbunden sind, dessen Ausgang mit dem dritten Eingang (P3) des Multiplexers (MUX) verbunden ist.

7. Messvorrichtung nach Anspruch 6, **dadurch gekennzeichnet, dass** mittels des Prozessors (MP_{S}) der Messsonde (1) oder eines dadurch gesteuerten Frequenzgenerators (FG) Testsignale (f_{G}, f_{R}), wie Rechtecksignale einer ersten oder einer ersten und einer zweiten Frequenz, erzeugbar und der Messelektrode und/oder der Referenzelektrode zuführbar sind, wobei die resultierenden Spannungsverläufe an jeder Elektrode mittels des Prozessors (MP_{S}) der Messsonde (1) auswertbar sind, um Zustandsdaten der Messsonde (1) zu gewinnen und gegebenenfalls in der Speichereinheit (MEM; MEM1, MEM2) zu speichern.

8. Messvorrichtung nach einem der Ansprüche 5-7, **dadurch gekennzeichnet, dass** ein in der Messsonde (1) vorgesehener Temperatursensor (17) mit einem weiteren Eingang (P4) des Multiplexers (MUX) verbunden ist und dass die ermittelten Temperaturdaten der Messsonde (1) oder des die Messsonde (1) umgebenden Mediums (6) mittels des Prozessors (MP_{S}) der Messsonde (1) gegebenenfalls in der Speichereinheit (MEM; MEM1, MEM2) speicherbar und auswertbar sind, um Belastungen bzw. den Zustand der Messsonde (1) und/oder Korrekturgrössen für die Messsignale zu ermitteln.

9. Messvorrichtung nach einem der Ansprüche 1-8, **dadurch gekennzeichnet, dass** die Betriebsdaten, die von der Messsonde (1) zum Transmitter (3) und gegebenenfalls weiter zu einem Leitrechner (300) übertragbar sind, Kenndaten, Konfigurationsdaten, Zustandsdaten der Messsonde (1), insbesondere während des Betriebs der Messsonde (1) ermittelte Testdaten, und/oder Belastungsdaten umfassen und/oder dass zur Messsonde (1) übermittelte Betriebsdaten aktualisierte Konfigurationsdaten und/oder Steuerdaten umfassen, mittels derer die Messsonde (1) konfigurierbar oder steuerbar ist.

10. Verfahren zur Steuerung der Messvorrichtung nach einem der Ansprüche 1-9 mit einer Messsonde (1), die wenigstens eine Speichereinheit (MEM; MEM1, MEM2) aufweist und die über ein Kabel (2), vorzugsweise ein Koaxialkabel, mit einem Transmitter (3) verbunden ist, der einen Prozessor (MP_{T}) aufweist, **dadurch gekennzeichnet, dass** die Messsonde (1) einen Erddraht (23') und einen mit der Speichereinheit (MEM; MEM1, MEM2) verbundenen ersten Signaldraht (21') aufweist, über den sowie das daran angeschlossene Kabel (2), entsprechend einem Übertragungsprotokoll, einander überlagert oder sequentiell, durch den im Transmitter (3) vorgesehenen Prozessor (MP_{T}) steuerbar, unidirektional das analoge oder digitale Messsignal der Messsonde (1) sowie vorzugsweise bidirektional aus der Speichereinheit (MEM; MEM1, MEM2) gelesene oder in diese zu schreibende digitale Betriebsdaten zwischen der Messsonde (1) und dem Transmitter (3) übertragen werden.

11. Verfahren nach Anspruch 10, **dadurch gekennzeichnet, dass** der erste Signaldraht (21') mit der Referenzelektrode und ein zweiter Signaldraht (22') mit der Messelektrode oder dass der erste Signaldraht (21') mit der Messelektrode und der zweite Signaldraht (22') mit der Referenzelektrode einer Messsonde (1), insbesondere einer potentiometrischen Messsonde (1), wie einer der pH-Messung dienenden Messsonde (1) verbunden ist, und dass die Signale der Messelektrode und der Referenzelektrode gegebenenfalls über einen Impedanzwandler (OV_{G}, OV_{R}) in analoger Form zum Transmitter (3) übertragen und dort gegebenenfalls mittels eines Differenzverstärkers (DV) ausgewertet werden.

12. Verfahren nach Anspruch 10, **dadurch gekennzeichnet, dass**, in der Messsonde (1) ein gegebenenfalls über einen Parallel-Seriell-Wandlerbaustein (I/O) mit dem ersten Signaldraht (21) verbundener, gegebenenfalls integral mit der wenigstens einen Speichereinheit (MEM) versehener Prozessor (MP_{S}) vorgesehen ist, durch den mittels der Messsonde (1) gewonnene Messsignale ausgewertet und gegebenenfalls dazu korrespondierende Daten in die wenigstens eine Speichereinheit (MEM; MEM1, MEM2) geschrieben oder aus dieser ausgelesen werden und/oder durch den die Messsonde (1) entsprechend den vom Transmitter (3) zugeführten Betriebsdaten konfiguriert und/oder gesteuert wird.

13. Verfahren nach Anspruch 10 oder 12, **dadurch gekennzeichnet, dass** mittels der Messsonde (1) ermittelte, erste oder weitere Messsignale in der Messsonde (1) direkt oder über einen Impedanzwandler (OV_{G}; OV_{R}) und/oder über einen Multiplexer (MUX) einem Analog/Digital-Wandler (A/D) zugeführt werden, dessen digitale Ausgangssignale, entsprechend dem Übertragungsprotokoll durch den im Transmitter (3) und/oder den in der Messsonde (1) vorgesehenen Prozessor (MP_{T}; MP_{S}) gesteuert, zum Transmitter (3) übertragen oder in der wenigstens einen Speichereinheit (MEM; MEM1, MEM2) gespeichert und wieder ausgelesen werden.

14. Verfahren nach Anspruch 11 oder 13, **dadurch gekennzeichnet, dass** die Messelektrode und die Referenzelektrode einer der pH-Messung dienenden Messsonde (1) über je einen Impedanzwandler (OV_{G}, OV_{R}) mit einem ersten bzw. zweiten Eingang (P1 bzw. P2) eines Multiplexers (MUX) verbunden sind, oder
dass die Messelektrode und die Referenzelektrode der der pH-Messung dienenden Messsonde (1) über je einen Impedanzwandler (OV_{G}, OV_{R}) mit dem ersten bzw. zweiten Eingang (P1 bzw. P2) des Multiplexers (MUX) verbunden sind, wobei die Ausgänge der Impedanzwandler (OV_{G}, OV_{R}) mit den Eingängen eines Differenzverstärkers (OV_{D}) verbunden sind, dessen Ausgang mit dem dritten Eingang (P3) des Multiplexers (MUX) verbunden ist; wobei die vereinzelt oder nach Differenzbildung dem vom Multiplexer (MUX) zugeführten Messsignale vom Prozessor (MP_{S}) der Messsonde (1) ausgewertet werden.

15. Verfahren nach Anspruch 14, **dadurch gekennzeichnet, dass** mittels des Prozessors (MP_{S}) der Messsonde (1) oder eines dadurch gesteuerten Frequenzgenerators (FG) Testsignale (f_{G}, f_{R}), wie Rechtecksignale einer ersten oder einer ersten und einer zweiten Frequenz, erzeugt und der Messelektrode und/oder der Referenzelektrode zugeführt werden, wobei die resultierenden Spannungsverläufe an jeder Elektrode mittels des Prozessors (MP_{S}) der Messsonde (1) ausgewertet werden, um Zustandsdaten der Messsonde (1) zu gewinnen und gegebenenfalls in der Speichereinheit (MEM; MEM1, MEM2) zu speichern.

16. Verfahren nach einem der Ansprüche 13 bis 15, **dadurch gekennzeichnet, dass** ein in der Messsonde (1) vorgesehener Temperatursensor (17) mit einem weiteren Eingang (P4) des Multiplexers (MUX) verbunden ist und dass die ermittelten Temperaturdaten der Messsonde (1) oder des die Messsonde (1) umgebenden Mediums (6) mittels des Prozessors (MP_{S}) der Messsonde (1) gegebenenfalls in der Speichereinheit (MEM; MEM1, MEM2) gespeichert und ausgewertet werden, um Belastungen bzw. den Zustand der Messsonde (1) und/oder Korrekturgrössen für die Messsignale zu ermitteln.

17. Verfahren nach einem der Ansprüche 10 bis 16, **dadurch gekennzeichnet, dass** die Betriebsdaten, die von der Messsonde (1) zum Transmitter (3) und gegebenenfalls weiter zu einem Leitrechner (300) übertragen werden, Identifikationsdaten, Kenndaten, Konfigurationsdaten, Zustandsdaten der Messsonde (1), insbesondere während des Betriebs der Messsonde (1) ermittelte Testdaten, und/oder Belastungsdaten umfassen und/oder dass zur Messsonde (1) übermittelte Betriebsdaten aktualisierte Konfigurationsdaten und/oder Steuerdaten umfassen, mittels derer die Messsonde (1) konfiguriert und/oder gesteuert wird.

18. Verfahren nach Anspruch 17, **dadurch gekennzeichnet, dass** die Identifikationsdaten, Kenndaten, Konfigurationsdaten, Zustandsdaten der Messsonde (1) und/oder Belastungsdaten durch den Leitrechner (300) erfasst und ausgewertet werden und die Messvorrichtung für die in einer Anlage durchgeführten Prozesse zu überwachen, zu steuern und/oder zu warten.

19. Verfahren nach einem der Ansprüche 10 bis 18, **dadurch gekennzeichnet, dass** ein Leitrechner (300) Betriebsdaten, insbesondere Konfigurationsdaten und/oder Betriebsprogramme oder Teile davon an die Messsonde (1) übermittelt, um diese mittels eines dezentralen Prozessors (MP_{T}; MP_{S}) in der Messsonde (1) oder im Transmitter (3) neu zu konfigurieren oder hinsichtlich der durchzuführenden Messprozesse zu steuern.

## Claims

1. Measuring device with at least one measuring probe (1), in particular a physical or electrochemical measuring probe, which is equipped with one or more memory units (MEM; MEM1, MEM2) and which is connected through a cable (2), preferably a coaxial cable, to a transmitter (3) which comprises a processor (MP_{T}), **characterized in that** the measuring probe (1) comprises a ground wire (23') and further comprises a first signal wire (21') that is connected to the memory unit (MEM; MEM1, MEM2), said first signal wire (21') as well as the cable (2) that is connected to it being operable to transmit data between the measuring probe (1) and the transmitter (3) under the control of the processor (MP_{T}) in accordance with a transmission protocol, for the unidirectional transmission of the analog or digital measuring signal of the measuring probe (1) as well as for the unidirectional or bidirectional transmission of digital operating data which are read from or to be written into the memory unit (MEM; MEM1, MEM2).

2. Measuring device according to claim 1, **characterized in that** the first signal wire (21') is connected to the reference electrode and a second signal wire (22') is connected to the measuring electrode, or that the first signal wire (21') is connected to the measuring electrode and the second signal wire (22') is connected to the reference electrode of a measuring probe (1), in particular a potentiometric measuring probe (1) serving for example for pH measurements, and that the signals of the measuring electrode and the reference electrode can be transmitted in analog form, where applicable by way of an impedance converter (OV_{G}, OV_{R}), to the transmitter (3), and that said signals can be evaluated in the transmitter (3), where applicable by means of a differential amplifier (DV).

3. Measuring device according to claim 2, **characterized in that** the measuring probe (1) comprises a coaxial coupler (20F or 20 M) with three contact elements (210, 220, 230) which are concentric to each other and configured in the shape of rings, sleeves, cylinders, bushings, discs and/or pistons separated from each other by insulating layers (220, 240) and which can be connected to the cable (2) through a further, corresponding coaxial coupler (20M or 20F, respectively) in such a way that the first signal wire (21') connects to the core conductor (21), the second signal wire (22') connects to the inner screen conductor (22), and the ground wire (23') connects to the outer screen conductor (23) of the coaxial cable (2) which is connected to the transmitter (3).

4. Measuring device according to claim 1, **characterized in that** the measuring probe (1) is equipped with a processor (MP_{S}) which may be connected to the first signal wire (21) through a parallel/serial converter component (I/O) and may integrally include the at least one memory unit (MEM), said processor (MP_{S}) being operable to process measuring signals that were collected by means of the measuring probe (1) and, if applicable, to write corresponding digital data into, or read such data out of, said at least one memory unit (MEM; MEM1, MEM2), and/or to configure and/or control the measuring probe (1) in accordance with the operating data provided by the transmitter (3).

5. Measuring device according to claim 1 or 4, **characterized in that** first or further measuring signals determined by means of the measuring probe (1) can be delivered in the measuring probe (1) either directly or by way of at least one impedance converter (OV_{G}; OV_{R}) and/or by way of a multiplexer (MUX) to an analog/digital converter (A/D), wherein the digital output signals of the latter - controlled in accordance with the transmission protocol by the processor (MP_{T}) which is arranged in the transmitter (3) and/or by the processor (MP_{S}) which is arranged in the measuring probe (1) - can be transmitted to the transmitter (3) or stored in, and subsequently recalled from, the at least memory unit (MEM; MEM1, MEM2).

6. Measuring device according to claim 2, **characterized in that** the measuring electrode and the reference electrode of a measuring probe (1) which serves to perform pH measurements are connected, respectively, through impedance converters (OV_{G}, OV_{R}) to first and second input terminals (P1, P2) of a multiplexer (MUX),
or
that the measuring electrode and the reference electrode of the measuring probe (1) which serves to perform pH measurements are connected, respectively, through impedance converters (OV_{G}, OV_{R}) to the first and second input terminals (P1, P2) of the multiplexer (MUX), wherein in addition the output terminals of the impedance converters (OV_{G}, OV_{R}) are also connected to the input terminals of a differential amplifier (OV_{D}) whose output is connected to the third input terminal (P3) of the multiplexer (MUX).

7. Measuring device according to claim 6, **characterized in that** the processor (MP_{S}) of the measuring probe (1) or a frequency generator (FG) controlled by the processor (MP_{S}) is operable to produce test signals (f_{G}, f_{R}) such as square-wave signals of a first frequency or of first and second frequencies and to deliver said test signals to the measuring electrode and/or to the reference electrode, and that the processor (MP_{S}) of the measuring probe (1) is operable to evaluate the resultant time profiles of the voltage at each of the electrodes in order to obtain status data of the measuring probe (1) and, if applicable, to store the data in the memory unit (MEM; MEM1, MEM2).

8. Measuring device according to one of the claims 5 to 7, **characterized in that** a temperature sensor (17) which is provided in the measuring probe (1) is connected to a further input terminal (P4) of the multiplexer (MUX) and that the processor (MP_{S}) of the measuring probe (1) is operable to store the temperature data determined for the measuring probe (1) or for the medium (6) surrounding the measuring probe (1), if applicable, in the memory unit (MEM; MEM1, MEM2) and to evaluate said data for the purpose of determining load exposures or the condition of the measuring probe (1) and/or correction quantities for the measuring signals.

9. Measuring device according to one of the claims 1 to 8, **characterized in that** the operating data which can be transmitted from the measuring probe (1) to the transmitter (3) and, where applicable, transmitted further to a lead computer (300), comprise characteristic data, configuration data, status data of the measuring probe (1), test data determined in particular during operation of the measuring probe (1), and/or load exposure data, and/or that operating data transmitted to the measuring probe (1) comprise updated configuration data and/or operation control data through which the measuring probe (1) can be configured and controlled.

10. Method of controlling the measuring device according to one of the claims 1 to 9 with a measuring probe (1) which comprises at least one memory unit (MEM; MEM1, MEM2) and which is connected through a cable (2), preferably a coaxial cable, to a transmitter (3) comprising a processor (MP_{T}), **characterized in that** the measuring probe (1) comprises a ground wire (23') and further comprises a first signal wire (21') connected to the memory unit (MEM; MEM1, MEM2), wherein by way of said first signal wire (21') as well as the cable (2) which is connected to it data are transmitted between the measuring probe (1) and the transmitter (3), under the control of the processor (MP_{T}), in accordance with a transmission protocol, superimposed on each other or sequentially, for the unidirectional transmission of the analog or digital measuring signal of the measuring probe (1) as well as for the unidirectional or bidirectional transmission of digital operating data that are to be read from, or are to be written into, the memory unit (MEM; MEM1, MEM2).

11. Method according to claim 10, **characterized in that** the first signal wire (21') is connected to the reference electrode and a second signal wire (22') is connected to the measuring electrode, or the first signal wire (21') is connected to the measuring electrode and the second signal wire (22') to the reference electrode of a measuring probe (1), in particular a potentiometric measuring probe that serves, e.g., for pH measurements, and that the signals of the measuring electrode and of the reference electrode can be transmitted as analog signals, where applicable, through an impedance converter (OV_{G}, OV_{R}), to the transmitter (3), where they may be evaluated, where applicable, by means of a differential amplifier (DV).

12. Method according to claim 10, **characterized in that** the measuring probe comprises a processor (MP_{S}) which may be connected to the first signal wire (21) through a parallel/serial converter component (I/O) and may integrally include the at least one memory unit (MEM), wherein the processor (MP_{S}) processes the measuring signals that were collected by means of the measuring probe and, if applicable, writes corresponding digital data into, or reads such data from, the at least one memory unit (MEM; MEM1, MEM2), and/or configures and/or controls the measuring probe (1) in accordance with the operating data provided by the transmitter (3).

13. Method according to claim 10 or 12, **characterized in that** first or further measuring signals determined by means of the measuring probe (1) are delivered in the measuring probe (1) either directly or by way of an impedance converter (OV_{G}; OV_{R}) and/or by way of a multiplexer (MUX) to an analog/digital converter (A/D), wherein the digital output signals of the latter - controlled in accordance with the transmission protocol by the processor (MP_{T}) which is arranged in the transmitter (3) and/or by the processor (MP_{S}) which is arranged in the measuring probe (1) - are transmitted to the transmitter (3) or stored in, and subsequently recalled from, the at least memory unit (MEM; MEM1, MEM2).

14. Method according to claim 11 or 13, **characterized in that** the measuring electrode and the reference electrode of a measuring probe (1) which serves to perform pH measurements are connected, respectively, through impedance converters (OV_{G}, OV_{R}) to first and second input terminals (P1, P2) of a multiplexer (MUX),
or
that the measuring electrode and the reference electrode of the measuring probe (1) which serves to perform pH measurements are connected, respectively, through impedance converters (OV_{G}, OV_{R}) to the first and second input terminals (P1, P2) of the multiplexer (MUX), wherein the output terminals of the impedance converters (OV_{G}, OV_{R}) are connected to the input terminals of a differential amplifier (OV_{D}) whose output is connected to the third input terminal (P3) of the multiplexer (MUX), and wherein further the measuring signals which are delivered to the multiplexer (MUX) either individually or after they have been brought into the form of differential signals are evaluated by the processor (MP_{S}) of the measuring probe (1).

15. Method according to claim 14, **characterized in that** the processor (MP_{S}) of the measuring probe (1) or a frequency generator (FG) controlled by the processor (MP_{S}) produces test signals (f_{G}, f_{R}) such as square-wave signals of a first frequency or of first and second frequencies and delivers said test signals to the measuring electrode and/or to the reference electrode, wherein the resultant time profiles of the voltage at each of the electrodes are evaluated by means of the processor (MP_{S}) of the measuring probe (1) in order to obtain status data of the measuring probe (1) and, if applicable, to store said data in the memory unit (MEM; MEM1, MEM2).

16. Method according to one of the claims 13 to 15, **characterized in that** a temperature sensor (17) which is provided in the measuring probe (1) is connected to a further input terminal (P4) of the multiplexer (MUX) and that the temperature data determined for the measuring probe (1) or for the medium (6) surrounding the measuring probe (1) are, where applicable, stored in the memory unit (MEM; MEM1, MEM2) by means of the processor (MP_{S}) of the measuring probe (1) and evaluated for the purpose of determining load exposures or the condition of the measuring probe (1) and/or correction quantities for the measuring signals.

17. Method according to one of the claims 10 to 16, **characterized in that** the operating data which are transmitted from the measuring probe (1) to the transmitter (3) and, if applicable, transmitted further to a lead computer (300), comprise identification data, characteristic data, configuration data, status data of the measuring probe (1), test data determined in particular during operation of the measuring probe (1), and/or load exposure data, and/or that operating data transmitted to the measuring probe (1) comprise updated configuration data and/or operation control data through which the measuring probe (1) is configured and controlled.

18. Method according to claim 17, **characterized in that** the identification data, characteristic data, configuration data, status data of the measuring probe (1), and/or load exposure data are registered and evaluated by the lead computer (300) for the purpose of monitoring, controlling and/or servicing the measuring device for the processes that are performed in a system.

19. Method according to one of the claims 10 to 18, **characterized in that** a lead computer (300) transmits operating data, in particular configuration data and/or operating programs or parts thereof, to the measuring probe (1), wherein said data - by means of a decentralized processor (MP_{T}; MP_{S}) in the measuring probe (1) or in the transmitter (3) - serve to reconfigure or to control the measuring probe (1) for the measuring processes to be performed.

## Revendications

1. Dispositif de mesure comprenant au moins une sonde de mesure (1) dotée d'une ou de plusieurs unités de mémoire (MEM ; MEM1, MEM2), en particulier d'une sonde de mesure physique ou électrochimique, qui est reliée par un câble (2), de préférence un câble coaxial, à un transmetteur (3), qui présente un processeur (MP_{T}), **caractérisé en ce que** la sonde de mesure (1) présente un fil de terre (23') et un premier fil de signal (21') relié à l'unité de mémoire (MEM ; MEM1, MEM2), lequel fil et le câble (2) raccordé à ce fil permettant de transmettre des données entre la sonde de mesure (1) et le transmetteur (3), de façon contrôlable par le processeur (MP_{T}) selon un protocole de transmission, pour la transmission unidirectionnelle du signal de mesure analogique ou numérique de la sonde de mesure (1) ainsi que pour la transmission unidirectionnelle ou bidirectionnelle des données de service numériques, qui sont lues à partir de l'unité de mémoire (MEM ; MEM1, MEM2) ou à enregistrer dans cette unité..

2. Dispositif de mesure selon la revendication 1, **caractérisé en ce que** le premier fil de signal (21') est relié à l'électrode de référence et un second fil de signal (22') à l'électrode de mesure ou **en ce que** le premier fil de signal (21') est relié à l'électrode de mesure et le second fil de signal (22') à l'électrode de référence d'une sonde de mesure (1), en particulier d'une sonde de mesure (1) potentiométrique, telle qu'une sonde de mesure (1) servant à mesurer le pH, et **en ce que** les signaux de l'électrode de mesure et de l'électrode de référence peuvent être transmis éventuellement par un convertisseur d'impédance (OV_{G}, OV_{R}) sous forme analogique au transmetteur (3) et peuvent y être éventuellement analysés au moyen d'un amplificateur différentiel (DV).

3. Dispositif de mesure selon la revendication 2, **caractérisé en ce que** la sonde de mesure (1) présente un connecteur coaxial (20F ou 20M) avec trois contacts (210, 220, 230) en forme de bague, de douille, de cylindre, de boite, de disque et/ou de piston, agencés de façon concentrique entre eux, qui sont séparés les uns des autres par des couches d'isolation (220, 240) et sont reliés par un autre connecteur coaxial (20M ou 20F), correspondant à ces contacts, au câble (2) de telle sorte que le premier fil de signal (21') est relié au conducteur interne (21), le second fil de signal (22') au conducteur de blindage (22) interne et le fil de terre (23') au conducteur de blindage (23) externe du câble coaxial (2) relié au transmetteur (3).

4. Dispositif de mesure selon la revendication 1, **caractérisé en ce qu'**il est prévu dans la sonde de mesure (1) un processeur (MP_{S}) relié éventuellement par un composant convertisseur parallèle-série (I/O) au premier fil de signal (21), éventuellement doté de façon intégrée de la au moins une unité de mémoire (MEM), processeur par lequel des signaux de mesure obtenus au moyen de la sonde de mesure (1) peuvent être analysés et éventuellement des données correspondant à ceux-ci peuvent être enregistrées dans la au moins une unité de mémoire (MEM ; MEM1, MEM2) et peuvent être lues à partir de cette unité et/ou par lequel la sonde de mesure (1) peut être configurée et/ou commandée en fonction des données de service amenées par le transmetteur (3).

5. Dispositif de mesure selon la revendication 1 ou 4, **caractérisé en ce que** des premiers ou d'autres signaux de mesure, déterminés au moyen de la sonde de mesure (1) peuvent être amenés dans la sonde de mesure (1) directement ou par l'intermédiaire d'au moins un convertisseur d'impédance (OV_{G} ; OV_{R}) et/ou au moyen d'un multiplexeur (MUX) à un convertisseur analogique/numérique (A/D), convertisseur dont des signaux de sortie numériques peuvent être transmis au transmetteur (3), de façon contrôlable selon le protocole de transmission par le processeur (MP_{T} ; MP_{S}) prévu dans le transmetteur (3) et/ou celui prévu dans la sonde de mesure (1), ou peuvent être stockés et à nouveau appelés dans la au moins une unité de mémoire (MEM ; MEM1, MEM2).

6. Dispositif de mesure selon la revendication 2, **caractérisé en ce que** l'électrode de mesure et l'électrode de référence d'une sonde de mesure (1) servant à la mesure du pH sont reliées par respectivement un convertisseur d'impédance (OV_{G}, OV_{R}) à une première ou une seconde entrée (P1 ou P2) d'un multiplexeur (MUX),
ou,
**en ce que** l'électrode de mesure et l'électrode de référence de la sonde de mesure (1) servant à la mesure du pH sont reliées à la première ou la seconde entrée (P1 ou P2) du multiplexeur (MUX) par respectivement un convertisseur d'impédance (OV_{G}, OV_{R}), les sorties des convertisseurs d'impédance (OV_{G}, OV_{R}) étant reliées en supplément aux entrées d'un amplificateur différentiel (OV_{D}), amplificateur dont la sortie est reliée à la troisième entrée (P3) du multiplexeur (MUX).

7. Dispositif de mesure selon la revendication 6, **caractérisé en ce que** des signaux de test (f_{G}, f_{R}) tels que des signaux rectangulaires d'une première ou d'une première et d'une seconde fréquence peuvent être générés au moyen du processeur (MP_{S}) de la sonde de mesure (1) ou d'un générateur de fréquence (FG) ainsi commandé et peuvent être amenés à l'électrode de mesure et/ou l'électrode de référence, les courbes de tension résultantes pouvant être analysées sur chaque électrode au moyen du processeur (MP_{S}) de la sonde de mesure (1), afin d'obtenir des données d'état de la sonde de mesure (1) et de les stocker éventuellement dans l'unité de mémoire (MEM ; MEM1, MEM2).

8. Dispositif de mesure selon l'une des revendications 5 à 7, **caractérisé en ce qu'**un capteur de température (17) prévu dans la sonde de mesure (1) est relié à une autre entrée (P4) du multiplexeur (MUX) et **en ce que** les données de température déterminées de la sonde de mesure (1) ou de l'agent (6) entourant la sonde de mesure (1) peuvent être stockées au moyen du processeur (MP_{S}) de la sonde de mesure (1) éventuellement dans l'unité de mémoire (MEM ; MEM1, MEM2) et peuvent être analysées, afin de déterminer des charges ou l'état de la sonde de mesure (1) et/ou des grandeurs de correction pour les signaux de mesure.

9. Dispositif de mesure selon l'une des revendications 1 à 8, **caractérisé en ce que** les données de service, qui peuvent être transmises de la sonde de mesure (1) au transmetteur (3) et éventuellement par la suite à un ordinateur pilote (300), comprennent des données caractéristiques, des données de configuration, des données d'état de la sonde de mesure (1), en particulier des données de test déterminées pendant le fonctionnement de la sonde de mesure (1), et/ou des données de charge et/ou **en ce que** des données de service transmises à la sonde de mesure (1) comprennent des données de configuration et/ou des données de commande actualisées, au moyen desquelles la sonde de mesure (1) peut être configurée ou commandée.

10. Procédé pour commander le dispositif de mesure selon l'une des revendications 1 à 9 avec une sonde de mesure (1), qui présente au moins une unité de mémoire (MEM ; MEM1, MEM2) et qui est reliée par un câble (2), de préférence un câble coaxial, à un transmetteur (3), qui présente un processeur (MP_{T}), **caractérisé en ce que** la sonde de mesure (1) présente un fil de terre (23') et un premier fil de signal (21') relié à l'unité de mémoire (MEM ; MEM1, MEM2), lequel signal et le câble (2) raccordé à ce fil permettent de transmettre en fonction d'un protocole de transmission, de façon superposée ou séquentielle, de façon contrôlable par le processeur (MP_{T}) prévu dans le transmetteur (3), de façon unidirectionnelle le signal de mesure analogique ou numérique de la sonde de mesure (1) et de préférence de façon bidirectionnelle des données de service numériques, lues à partir de l'unité de mémoire (MEM ; MEM1, MEM2) ou enregistrés dans cette unité, entre la somme de mesure (1) et le transmetteur (3).

11. Procédé selon la revendication 10, **caractérisé en ce que** le premier fil de signal (21') est relié à l'électrode de référence et un second fil de signal (22') est relié à l'électrode de mesure ou **en ce que** le premier fil de signal (21') est relié à l'électrode de mesure et le second fil de signal (22') à l'électrode de référence d'une sonde de mesure (1), en particulier d'une sonde de mesure (1) potentiométrique, telle qu'une sonde de mesure (1) servant à la mesure du pH, et **en ce que** les signaux de l'électrode de mesure et de l'électrode de référence sont transmis éventuellement par un convertisseur d'impédance (OV_{G}, OV_{R}) dans une forme analogique au transmetteur (3) et y sont analysés éventuellement au moyen d'un amplificateur différentiel (DV).

12. Procédé selon la revendication 10, **caractérisé en ce qu'**il est prévu dans la sonde de mesure (1) un processeur (MP_{S}) relié éventuellement par un composant convertisseur parallèle-série (I/O) au premier signal entre le fil de signal (21), éventuellement doté de façon intégrée de la au moins une unité de mémoire (MEM), processeur par lequel des signaux de mesure obtenus au moyen de la sonde de mesure (1) sont analysés et éventuellement des données correspondant à ces signaux sont enregistrées dans la au moins une unité de mémoire (MEM ; MEM1, MEM2) ou sont lues à partir de cette unité et/ou sont configurées et/ou par lequel la sonde de mesure (1) est configurée et/ou commandée en fonction des données de service amenées par le transmetteur (3).

13. Procédé selon la revendication 10 ou 12, **caractérisé en ce que** des premiers ou d'autres signaux de mesure, déterminés au moyen de la sonde de mesure (1), sont amenés dans la sonde de mesure (1) directement ou par un convertisseur d'impédance (OV_{G} ; OV_{R}) et/ou au moyen d'un multiplexeur (MUX) à un convertisseur analogique/numérique (A/D), dont des signaux de sortie numériques sont transmis, de façon commandée en fonction du protocole de transmission par le processeur (MP_{T} ; MP_{S}) prévu dans le transmetteur (3) et/ou prévu dans la sonde de mesure (1), au transmetteur (3) ou sont stockés dans la au moins une unité de mémoire (MEM ; MEM1, MEM2) et lus à nouveau.

14. Procédé selon la revendication 11 ou 13, **caractérisé en ce que** l'électrode de mesure et l'électrode de référence d'une sonde de mesure (1) servant à la mesure du pH est reliée par respectivement un convertisseur d'impédance (OV_{G}, OV_{R}) à une première ou une seconde entrée (P1 ou P2) d'un multiplexeur (MUX)
ou
**en ce que** l'électrode de mesure et l'électrode de référence de la sonde de mesure (1) servant à la mesure du pH sont reliées par respectivement un convertisseur d'impédance (OV_{G}, OV_{R}) à la première ou la seconde entrée (P1 ou P2) du multiplexeur (MUX), les sorties des convertisseur d'impédance (OV_{G}, OV_{R}) étant reliées aux entrées d'un amplificateur différentiel (OV_{D}), dont la sortie est reliée à la troisième entrée (P3) du multiplexeur (MUX), les signaux de mesure amenés de façon isolée ou après la formation de la différence au multiplexeur (MUX) étant analysés par le processeur (MP_{S}) de la sonde de mesure (1).

15. Procédé selon la revendication 14, **caractérisé en ce que** des signaux de test (f_{G}, f_{R}), tels que des signaux rectangulaires d'une première fréquence ou d'une première fréquence et d'une seconde fréquence, sont générés au moyen du processeur (MP_{S}) de la sonde de mesure (1) ou d'un générateur de fréquence (FG) ainsi commandé et sont amenés à l'électrode de mesure et/ou à l'électrode de référence, les courbes de tension résultantes étant analysées sur chaque électrode au moyen du processeur (MP_{S}) de la sonde de mesure (1), afin d'obtenir des données d'état de la sonde de mesure (1) et de les stocker éventuellement dans l'unité de mémoire (MEM ; MEM1, MEM2).

16. Procédé selon l'une des revendications 13 à 15, **caractérisé en ce qu'**un capteur de température (17) prévu dans la sonde de mesure (1) est relié à une autre entrée (P4) du multiplexeur (MUX) et **en ce que** les données de température déterminées de la sonde de mesure (1) ou de l'agent (6) entourant la sonde de mesure (1) sont stockées au moyen du processeur (MP_{S}) de la sonde de mesure (1) éventuellement dans l'unité de mémoire (MEM ; MEM1, MEM2) et sont analysées, afin de déterminer des charges ou l'état de la sonde de mesure (1) et/ou des grandeurs de correction pour les signaux de mesure.

17. Procédé selon l'une des revendications 10 à 16, **caractérisé en ce que** les données de service, qui sont transmises de la sonde de mesure (1) au transmetteur (3) et éventuellement également à un ordinateur pilote (300), comprennent des données d'identification, des données caractéristiques, des données de configuration, des données d'état de la sonde de mesure (1), en particulier des données de test déterminées pendant le fonctionnement de la sonde de mesure (1) et/ou des données de charge et/ou **en ce que** des données de service transmises à la sonde de mesure (1) comprennent des données de configuration et/ou des données de commande actualisées, au moyen desquelles la sonde de mesure (1) est configurée et/ou commandée.

18. Procédé selon la revendication 17, **caractérisé en ce que** les données d'identification, données caractéristiques, données de configuration, données d'état de la sonde de mesure (1) et/ou des données de charge sont enregistrées par l'ordinateur pilote (300) et sont analysées pour contrôler, commander et/ou entretenir le dispositif de mesure pour les processus mis en oeuvre dans une installation.

19. Procédé selon l'une des revendications 10 à 18, **caractérisé en ce qu'**un ordinateur pilote (300) transmet des données d'exploitation, en particulier des données de configuration et/ou des programmes d'exploitation ou des parties de ceux-ci à la sonde de mesure (1), afin de les reconfigurer au moyen d'un processeur (MP_{T} ; MP_{S}) indépendant de l'ordinateur central dans la sonde de mesure (1) ou dans le transmetteur (3) ou de les commander en ce qui concerne les processus de mesure à mettre en oeuvre.
